# EUROPÄISCHE PATENTSCHRIFT

(11) **EP 0 929 221 B1**
(45) Veröffentlichungstag und Bekanntmachung des Hinweises auf die Patenterteilung: **27.11.2002**
(21) Anmeldenummer: 97944866.9
(22) Anmeldetag: 10.09.1997
(51) Int. Cl.: A01N 47/38

(54) **SELEKTIVE HERBIZIDE AUF BASIS VON ARYLSULFONYLAMINOCARBONYLTRIAZOLINONEN**
SELECTIVE HERBICIDES BASED ON ARYLSULPHONYLAMINOCARBONYLTRIAZOLINONES
HERBICIDES SELECTIFS A BASE D' ARYLSULFONYLAMINOCARBONYLTRIAZOLINONES

(30) Priorität: 23.09.1996 DE 19638887
(43) Veröffentlichungstag der Anmeldung: 21.07.1999
(73) Patentinhaber: Bayer CropScience AG, 40789 Monheim (DE)
(72) Erfinder: DAHMEN, Peter, D-41470 Neuss (DE); FEUCHT, Dieter, D-40789 Monheim (DE); MÜLLER, Klaus-Helmut, D-40593 Düsseldorf (DE); SANTEL, Hans-Joachim, D-51371 Leverkusen (DE)
(86) Internationale Anmeldenummer: EP9704947
(87) Internationale Veröffentlichungsnummer: WO98012923

(56) Entgegenhaltungen:
- EP-A- 0 427 072
- EP-A- 0 507 171
- EP-A- 0 562 731
- CLIVE TOMLIN (HRSG): "The Pesticide Manual, 10th. Edition " 1995 , BRITISH CROP PROTECTION COUNCIL , FARNHAM, GB XP002054236 siehe Seiten 1335-1341, Index 6 siehe die Einträge Nr.: 23, 148, 5, 222, 225, 270, 375, 334, 441, 478, 592, 675, 687, 693 und 697
- CHEMICAL PATENTS INDEX, DOCUMENTATION ABSTRACTS JOURNAL Week 9425 24.August 1994 Derwent Publications Ltd., London, GB; AN 94-206300 XP002054306 & JP 06 145 010 A (CHUGAI PHARM. LTD.) , 24.Mai 1994

## Beschreibung

Die Erfindung betrifft neue herbizide, synergistische Wirkstoffkombinationen, die aus bekannten Arylsulfonylaminocarbonyltriazolinonen einerseits und bekannten, herbizid wirksamen Verbindungen andererseits bestehen und mit besonders gutem Erfolg zur selektiven Unkrautbekämpfung in verschiedenen Nutzpflanzenkulturen verwendet werden können.

Sulfonylaminocarbonyltriazolinone sind als breit wirksame Herbizide Gegenstand einer Reihe von Patentanmeldungen (vgl. EP 341489, EP 422469, EP 425948, EP 431291, EP 507171, EP 534266, WO 96/11188, DE 19508118). Die bekannten Sulfonylaminocarbonyltriazolinone weisen jedoch eine Reihe von Wirkungslücken auf.

Überraschenderweise wurde nun gefunden, daß eine Reihe von bekannten Wirkstoffen aus der Reihe der Arylsulfonylaminocarbonyltriazolinone bei gemeinsamer Anwendung mit bekannten herbizid wirksamen Verbindungen aus verschiedenen Stoffklassen ausgesprochen synergistische Effekte hinsichtlich der Wirkung gegen Unkräuter zeigen und besonders vorteilhaft als breit wirksame Kombinationspräparate zur selektiven Bekämpfung von Unkräutern in Nutzpflanzenkulturen, wie z.B. Weizen, verwendet werden können.

Gegenstand der Erfindung sind selektiv-herbizide Mittel, gekennzeichnet durch einen wirksamen Gehalt an einer Wirkstoffkombination bestehend aus
(a) einem Arylsulfonylaminocarbonyltriazolinon der allgemeinen Formel (I) 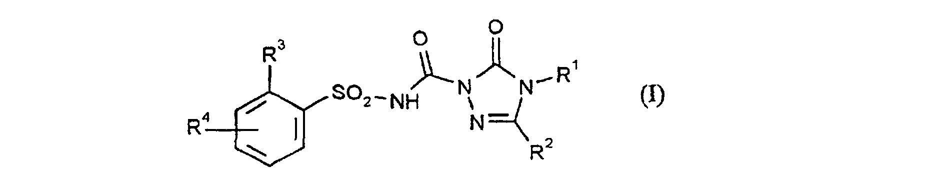 in welcher
   - R¹: für Wasserstoff, Hydroxy, Amino, Alkylidenamino oder für jeweils gegebenenfalls substituiertes Alkyl, Alkenyl, Alkinyl, Alkoxy, Alkenyloxy, Alkylamino, Dialkylamino, Cycloalkyl, Cycloalkylalkyl, Cycloalkylamino, Aryl oder Arylalkyl steht,
   - R²: für Wasserstoff, Hydroxy, Mercapto, Amino, Cyano, Halogen oder für jeweils gegebenenfalls substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino, Alkinylamino, Cycloalkyl, Cycloalkyloxy, Cycloalkylthio, Cycloalkylamino, Cycloalkylalkyl, Aryl, Aryloxy, Arylthio, Arylamino oder Arylalkyl steht,
   - R³: für Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht, und
   - R⁴: für Wasserstoff, Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht,
   und/oder einem Salz einer Verbindung der Formel (I)
   ("Wirkstoffe der Gruppe 1")
   und
(b) einer oder mehrerer Verbindungen aus einer zweiten Gruppe von Herbiziden, welche die nachstehend genannten Wirkstoffe enthält:
   N-(4,6-Dimethoxy-pyrimidin-2-yl)-N'-(N-methyl-N-methylsulfonyl-sulfamoyl)-harnstoff (Amidosulfuron), 3,5-Dibrom-4-hydroxy-benzonitril (Bromoxynil), 2-(4-Chlor-2-fluor-5-(2-chlor-2-ethoxycarbonyl-ethyl)-phenyl)-4-difluormethyl-5-methyl-2,4-dihydro-3H-1,2,4-triazol-3-on (Carfentrazone-ethyl, F-8426), (R)-(2-Propinyl)-2-[4-(5-chlor-3-fluor-pyridin-2-yl-oxy)-phenoxy-propanoat (Clodinafop-propargyl), 2,4-Dichlor-phenoxyessigsäure (2,4-D), (R)-2-(2,4-Dichlor-phenoxy)-propansäure (Dichlorprop-P), Methyl-2-[4-(2,4-dichlorphenoxy)-phenoxy]-propanoat (Diciofop-methyl), N-(2,4-Difluor-phenyl)-2-(3-trifluormethyl-phenoxy)-pyridin-3-carboxamid (Diflufenican), (4-Amino-3,5-dichlor-6-fluor-pyridin-2-yl-oxy)-essigsäure (Fluroxypyr), 5-Methylamino-2-phenyl-4-(3-trifluormethyl-phenyl)-3(2H)-furanon (Flurtamone), N-Phosphonomethyl-glycin (-Isopropylammmonium), (Glyphosate, -Isopropylammonium), Methyl-2-(4,5-dihydro-4-methyl-4-isopropyl-5-oxo-1H-imidazol-2-yl)-4-methyl-benzoat (Imazamethabenz-methyl), 2-(4,5-Dihydro-4-methyl-4-isopropyl-5-oxo-1H-imidazol-2-yl)-5-methoxymethyl-pyridin-3-carbonsäure (Imazamox), N,N-Dimethyl-N'-(4-isopropyl-phenyl)-harnstoff (Isoproturon), N-(2,6-Dichlor-3-methyl-phenyl)-5,7-dimethoxy-1,2,4-triazolo[1,5-a]-pyrimidin-2-sulfonamid (Metosulam, DE-511), 4-Amino-6-tert-butyl-3-methylthio-1,2,4-triazin-5(4H)-on (Metribuzin), N-(4-Methoxy-6-methyl-1,3,5-triazin-2-yl)-N'-(2-methoxycarbonyl-phenylsulfonyl)-harnstoff (Metsulfuron-methyl), N-(4,6-Dimethoxy-pyrimidin-2-yl)-N'-(2-ethylsulfonyl-imidazo[1,2-a]pyridin-3-sulfonamid (Sulfosulfuron, MON-37500), N-(4-Methoxy-6-methyl-1,3,5-triazin-2-yl)-N'-(2-methoxycarbonyl-thien-3-yl-sulfonyl)-harnstoff (Thifensulfuron-methyl), N-Methyl-N-(4-methoxy-6-methyl-1,3,5-triazin-2-yl)-N'-(2-methoxycarbonyl-phenylsulfonyl)-harnstoff (Tribenuron-methyl), ("Wirkstoffe der Gruppe 2"),
wobei im allgemeinen auf 1 Gewichtsteil eines Wirkstoffs der Gruppe 1 (d.h. der Formel (I)) 0,01 bis 1000 Gewichtsteile eines Wirkstoffs der Gruppe 2 entfallen.

Von besonderem Interesse sind erfindungsgemäße selektiv-herbizide Mittel, die gekennzeichnet sind durch einen Gehalt an einer Wirkstoffkombination aus
(a) einem Arylsulfonylaminocarbonyltriazolinon der allgemeinen Formel (I),
   in welcher
   - R¹: für Wasserstoff, Hydroxy, Amino, C₂-C₆-Alkylidenamino, für jeweils gegebenenfalls durch Cyano, Halogen oder C₁-C₄-Alkoxy substituiertes Alkyl, Alkenyl, Alkinyl, Alkoxy, Alkenyloxy, Alkylamino oder Dialkylamino mit jeweils bis zu 6 Kohlenstoffatomen, für jeweils gegebenenfalls durch Cyano, Halogen oder C₁-C₄-Alkyl substituiertes Cycloalkyl, Cycloalkylalkyl oder Cycloalkylamino mit jeweils 3 bis 6 Kohlenstoffatomen in den Cycloalkylgruppen und gegebenenfalls 1 bis 4 Kohlenstoffatomen im Alkylteil, oder für jeweils gegebenenfalls durch Cyano, Nitro, Halogen, C₁-C₄-Alkyl, C₁-C₄-Halogenalkyl, C₁-C₄-Alkoxy oder C₁-C₄-Halogenalkoxy substituiertes Phenyl oder Phenyl-C₁-C₄-alkyl steht,
   - R²: für Wasserstoff, Hydroxy, Mercapto, Amino, Cyano, Halogen, für jeweils gegebenenfalls durch Cyano, Halogen oder C₁-C₄-Alkoxy substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino oder Alkinylamino mit jeweils bis zu 6 Kohlenstoffatomen, für jeweils gegebenenfalls durch Cyano, Halogen oder C₁-C₄-Alkyl substituiertes Cycloalkyl, Cycloalkyloxy, Cycloalkylthio, Cycloalkylamino oder Cycloalkylalkyl mit jeweils 3 bis 6 Kohlenstoffatomen in den Cycloalkylgruppen und gegebenenfalls 1 bis 4 Kohlenstoffatomen im Alkylteil, oder für jeweils gegebenenfalls durch Cyano, Nitro, Halogen, C₁-C₄-Alkyl, C₁-C₄-Halogenalkyl, C₁-C₄-Alkoxy oder C₁-C₄-Halogenalkoxy substituiertes Phenyl, Phenoxy, Phenylthio, Phenylamino oder Phenyl-C₁-C₄-alkyl steht,
   - R³: für Nitro, Cyano, Halogen, für jeweils gegebenenfalls durch Cyano, Halogen oder C₁-C₄-Alkoxy substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio mit jeweils bis zu 6 Kohlenstoffatomen, für jeweils gegebenenfalls durch Cyano, Halogen oder C₁-C₄-Alkyl substituiertes Cycloalkyl, Cycloalkyloxy, Cycloalkylthio, Cycloalkylamino mit jeweils 3 bis 6 Kohlenstoffatomen in den Cycloalkylgruppen, oder für jeweils gegebenenfalls durch Cyano, Nitro, Halogen, C₁-C₄-Alkyl, C₁-C₄-Halogenalkyl, C₁-C₄-Alkoxy oder C₁-C₄-Halogenalkoxy substituiertes Phenyl, Phenoxy, Phenylthio, Phenylsulfinyl, Phenylsulfonyl oder Phenylamino steht, und
   - R⁴: für Wasserstoff, Nitro, Cyano, Halogen, für jeweils gegebenenfalls durch Cyano, Halogen oder C₁-C₄-Alkoxy substituiertes substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy oder Alkinylthio mit jeweils bis zu 6 Kohlenstoffatomen, für jeweils gegebenenfalls durch Cyano, Halogen oder C₁-C₄-Alkyl substituiertes Cycloalkyl, Cycloalkyloxy, Cycloalkylthio, Cycloalkylamino mit jeweils 3 bis 6 Kohlenstoffatomen in den Cycloalkylgruppen, oder für jeweils gegebenenfalls durch Cyano, Nitro, Halogen, C₁-C₄-Alkyl, C₁-C₄-Halogenalkyl, C₁-C₄-Alkoxy oder C₁-C₄-Halogenalkoxy substituiertes Phenyl, Phenoxy, Phenylthio, Phenylsulfinyl, Phenylsulfonyl oder Phenylamino steht,
   und/oder einem Salz einer Verbindung der Formel (I)
   ("Wirkstoffe der Gruppe 1")
   und
(b) ein bis drei Verbindungen aus einer zweiten Gruppe von Herbiziden, welche die nachstehend genannten Wirkstoffe enthält:
   N-(4,6-Dimethoxy-pyrimidin-2-yl)-N'-(N-methyl-N-methylsulfonyl-sulfamoyl)-harnstoff (Amidosulfuron), 3,5-Dibrom-4-hydroxy-benzonitril (Bromoxynil), 2-(4-Chlor-2-fluor-5-(2-chlor-2-ethoxycarbonyl-ethyl)-phenyl)-4-difluormethyl-5-methyl-2,4-dihydro-3H-1,2,4-triazol-3-on (Carfentrazone-ethyl, F-8426), (R)-(2-Propinyl)-2-[4-(5-chlor-3-fluor-pyridin-2-yl-oxy)-phenoxy-propanoat (Clodinafop-propargyl), 2,4-Dichlor-phenoxyessigsäure (2,4-D), (R)-2-(2,4-Dichlor-phenoxy)-propansäure (Dichlorprop-P), Methyl-2-[4-(2,4-dichlorphenoxy)-phenoxy]-propanoat (Diclofop-methyl), N-(2,4-Difluor-phenyl)-2-(3-trifluormethyl-phenoxy)-pyridin-3-carboxamid (Diflufenican), (4-Amino-3,5-dichlor-6-fluor-pyridin-2-yl-oxy)-essigsäure (Fluroxypyr), 5-Methylamino-2-phenyl-4-(3-trifluormethyl-phenyl)-3(2H)-furanon (Flurtamone), N-Phosphonomethyl-glycin (-Isopropylammmonium), (Glyphosate, -Isopropylammonium), Methyl-2-(4,5-dihydro-4-methyl-4-isopropyl-5-oxo-1H-imidazol-2-yl)-4-methyl-benzoat (Imazamethabenz-methyl), 2-(4,5-Dihydro-4-methyl-4-isopropyl-5-oxo- 1H-imidazol-2-yl)-5-methoxymethyl-pyridm-3-carbonsäure (Imazamox), N,N-Dimethyl-N'-(4-isopropyl-phenyl)-harnstoff (Isoproturon), N-(2,6-Dichlor-3-methyl-phenyl)-5,7-dimethoxy-1,2,4-triazolo[1,5-a]-pyrimidin-2-sulfonamid (Metosulam, DE-511), 4-Amino-6-tert-butyl-3-methylthio-1,2,4-triazin-5(4H)-on (Metribuzin), N-(4-Methoxy-6-methyl-1,3,5-triazin-2-yl)-N'-(2-methoxycarbonyl-phenylsulfonyl)-harnstoff (Metsulfuron-methyl), N-(4,6-Dimethoxy-pyrimidin-2-yl)-N'-(2-ethylsulfonyl-imidazo[1,2-a]pyridin-3-sulfonamid (Sulfosulfuron, MON-37500), N-(4-Methoxy-6-methyl-1,3,5-triazin-2-yl)-N'-(2-methoxycarbonyl-thien-3-yl-sulfonyl)-harnstoff (Thifensulfuron-methyl), N-Methyl-N-(4-methoxy-6-methyl-1,3,5-triazin-2-yl)-N'-(2-methoxycarbonyl-phenylsulfonyl)-harnstoff (Tribenuron-methyl), ("Wirkstoffe der Gruppe 2"),

Von ganz besonderem Interesse sind erfindungsgemäße selektiv-herbizide Mittel, die gekennzeichnet sind durch einen Gehalt an einer Wirkstoffkombination bestehend aus
(a) einem Arylsulfonylaminocarbonyltriazolinon der allgemeinen Formel (I),
   in welcher
   - R¹: für Wasserstoff, Amino, für jeweils gegebenenfalls durch Cyano, Fluor, Chlor, Methoxy oder Ethoxy substituiertes Methyl, Ethyl, n- oder i-Propyl, n-, i-, s- oder t-Butyl, Ethenyl, Propenyl, Butenyl, Ethinyl, Propinyl, Butinyl, Methoxy, Ethoxy, n- oder i-Propoxy, n-, i-, s- oder t-Butoxy, Propenyloxy, Butenyloxy, Methylamino, Ethylamino, n- oder i-Propylamino, n-, i-, s- oder t-Butylamino, Dimethylamino oder Diethylamino, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropylmethyl, Cyclobutylmethyl, Cyclopentylmethyl, Cyclohexylmethyl, Cyclopropylamino, Cyclobutylamino, Cyclopentylamino oder Cyclohexylamino, oder für jeweils gegebenenfalls durch Cyano, Nitro, Fluor, Chlor, Brom, Methyl, Ethyl, n- oder i-Propyl, n-, i-, s- oder t-Butyl, Trifluormethyl, Methoxy, Ethoxy, Difluormethoxy oder Trifluormethoxy substituiertes Phenyl oder Benzyl steht,
   - R²: für Wasserstoff, Hydroxy, Mercapto, Amino, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Methoxy, Ethoxy, n- oder i-Propoxy, n-, i-, s- oder t-Butoxy, Methylthio, Ethylthio, n- oder i-Propylthio, n-, i-, s- oder t-Butylthio, Methylamino, Ethylamino, n- oder i-Propylamino, n-, i-, s- oder t-Butylamino, Dimethylamino, Diethylamino, Ethenyl, Propenyl, Butenyl, Ethinyl, Propinyl, Butinyl, Propenyloxy, Butenyloxy, Propinyloxy, Butinyloxy, Propenylthio, Butenylthio, Propinylthio, Butinylthio, Propenylamino, Butenylamino, Propinylamino oder Butinylamino, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino, Cyclohexylamino, Cyclopropylmethyl, Cyclobutylmethyl, Cyclopentylmethyl oder Cyclohexylmethyl, oder für jeweils gegebenenfalls durch Cyano, Nitro, Fluor, Chlor, Brom, Methyl, Ethyl, n- oder i-Propyl, n-, i-, s- oder t-Butyl, Trifluormethyl, Methoxy, Ethoxy, Difluormethoxy oder Trifluormethoxy substituiertes Phenyl, Phenoxy, Phenylthio, Phenylamino oder Benzyl steht,
   - R³: für Nitro, Cyano, Fluor, Chlor, Brom, für jeweils gegebenenfalls durch Cyano, Fluor, Chlor, Methoxy oder Ethoxy substituiertes Methyl, Ethyl, n- oder i-Propyl, n-, i-, s- oder t-Butyl, Acetyl, Propionyl, n- oder i-Butyroyl, Methoxy, Ethoxy, n- oder i-Propoxy, n-, i-, s- oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethylsulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino, oder für jeweils gegebenenfalls durch Cyano, Nitro, Fluor, Chlor, Brom, Methyl, Ethyl, n- oder i-Propyl, n-, i-, s- oder t-Butyl, Trifluormethyl, Methoxy, Ethoxy, n- oder i-Propoxy, n-, i-, s- oder t-Butoxy, Difluormethoxy oder Trifluormethoxy substituiertes Phenyl, Phenoxy, Phenylthio, Phenylsulfinyl, Phenylsulfonyl oder Phenylamino steht, und
   - R⁴: für Wasserstoff, Nitro, Cyano, Fluor, Chlor, Brom, für jeweils gegebenenfalls durch Cyano, Fluor, Chlor Methoxy oder Ethoxy substituiertes substituiertes Methyl, Ethyl, n- oder i-Propyl, n-, i-, s- oder t-Butyl, Acetyl, Propionyl, n- oder i-Butyroyl, Methoxy, Ethoxy, n- oder i-Propoxy, n-, i-, s- oder t-Butoxy, Methoxycarbonyl, Ethoxycarbonyl, n- oder i-Propoxycarbonyl, Methylthio, Ethylthio, n- oder i-Propylthio, n-, i-, s- oder t-Butylthio, Methylsulfinyl, Ethyl sulfinyl, n- oder i-Propylsulfinyl, Methylsulfonyl, Ethylsulfonyl, n- oder i-Propylsulfonyl, Methylamino, Ethylamino, n- oder i-Propylamino, n-, i-, s- oder t-Butylamino, Ethenyl, Propenyl, Butenyl, Propenyloxy, Butenyloxy, Propenylthio, Butenylthio, Propenylamino, Butenylamino, Ethinyl, Propinyl, Butinyl, Propinyloxy, Butinyloxy, Propinylthio oder Butinylthio, für jeweils gegebenenfalls durch Cyano, Fluor, Chlor, Brom, Methyl, Ethyl, n- oder i-Propyl substituiertes Cyclopropyl, Cyclobutyl, Cyclopentyl, Cyclohexyl, Cyclopropyloxy, Cyclobutyloxy, Cyclopentyloxy, Cyclohexyloxy, Cyclopropylthio, Cyclobutylthio, Cyclopentylthio, Cyclohexylthio, Cyclopropylamino, Cyclobutylamino, Cyclopentylamino oder Cyclohexylamino, oder für jeweils gegebenenfalls durch Cyano, Nitro, Fluor, Chlor, Brom, Methyl, Ethyl, n- oder i-Propyl, Trifluormethyl, Methoxy, Ethoxy, n- oder i-Propoxy, n-, i-, s- oder t-Butoxy, Difluormethoxy oder Trifluormethoxy substituiertes Phenyl, Phenoxy, Phenylthio, Phenylsulfinyl, Phenylsulfonyl oder Phenylamino steht,
   und/oder einem Salz einer Verbindung der Formel (I)
   ("Wirkstoffe der Gruppe 1")
   und
(b) einer oder zweier Verbindungen aus einer zweiten Gruppe von Herbiziden, welche die nachstehend genannten Wirkstoffe enthält:
   N-(4,6-Dimethoxy-pyrimidin-2-yl)-N'-(N-methyl-N-methylsulfonyl-sulfarnoyl)-harnstoff (Amidosulfuron), 3,5-Dibrom-4-hydroxy-benzonitril (Bromoxynil), 2-(4-Chlor-2-fluor-5-(2-chlor-2-ethoxycarbonyl-ethyl)-phenyl)-4-difluormethyl-5-methyl-2,4-dihydro-3H-1,2,4-triazol-3-on (Carfentrazone-ethyl, F-8426), (R)-(2-Propinyl)-2-[4-(5-chlor-3-fluor-pyridin-2-yl-oxy)-phenoxy-propanoat (Clodinafop-propargyl), 2,4-Dichlor-phenoxyessigsäure (2,4-D), (R)-2-(2,4-Dichlor-phenoxy)-propansäure (Dichlorprop-P), Methyl-2-[4-(2,4-dichlorphenoxy)-phenoxy]-propanoat (Diclofop-methyl), N-(2,4-Difluor-phenyl)-2-(3-trifluormethyl-phenoxy)-pyridin-3-carboxamid (Diflufenican), (4-Amino-3,5-dichlor-6-fluor-pyridin-2-yl-oxy)-essigsäure (Fluroxypyr), 5-Methylamino-2-phenyl-4-(3-trifluormethyl-phenyl)-3(2H)-furanon (Flurtamone), N-Phosphonomethyl-glycin (-Isopropylammmonium), (Glyphosate, -Isopropylammonium), Methyl-2-(4,5-dihydro-4-methyl-4-isopropyl-5-oxo-1H-imidazol-2-yl)-4-methyl-benzoat (Imazamethabenz-methyl), 2-(4,5-Dihydro-4-methyl-4-isopropyl-5-oxo-1H-imidazol-2-yl)-5-methoxymethyl-pyridin-3-carbonsäure (Imazamox), N,N-Dimethyl-N'-(4-isopropyl-phenyl)-harnstoff (Isoproturon), N-(2,6-Dichlor-3-methyl-phenyl)-5,7-dimethoxy-1,2,4-triazolo[1,5-a]-pyrimidin-2-sulfonamid (Metosulam, DE-511), 4-Amino-6-tert-butyl-3-methylthio-1,2,4-triazin-5(4H)-on (Metribuzin), N-(4-Methoxy-6-methyl-1,3,5-triazin-2-yl)-N'-(2-methoxycarbonyl-phenylsulfonyl)-harnstoff (Metsulfuron-methyl), N-(4,6-Dimethoxy-pyrimidin-2-yl)-N'-(2-ethylsulfonyl-imidazo[1,2-a]pyridin-3-sulfonamid (Sulfosulfuron, MON-37500), N-(4-Methoxy-6-methyl-1,3,5-triazin-2-yl)-N'-(2-methoxycarbonyl-thien-3-yl-sulfonyl)-harnstoff (Thifensulfuron-methyl), N-Methyl-N-(4-methoxy-6-methyl-1,3,5-triazin-2-yl)-N'-(2-methoxycarbonyl-phenylsulfonyl)-harnstoff (Tribenuron-methyl), ("Wirkstoffe der Gruppe 2"),

An Stelle der reinen Wirkstoffe der Formel (I) können auch Salze der Verbindungen der Formel (I) mit Metallen und/oder mit basischen Stickstoffverbindungen in den erfindungsgemäßen Wirkstoffkombinationen eingesetzt werden.

Hierbei werden Salze der Verbindungen der Formel (I) mit Alkalimetallen, wie z.B. Lithium, Natrium, Kalium, Rubidium oder Cäsium, ganz besonders mit Natrium oder Kalium, mit Erdalkalimetallen, wie z.B. Magnesium, Calcium oder Barium, ganz besonders mit Calcium, oder mit Erdmetallen wie z.B. Aluminium bevorzugt.

Weiter werden Salze der Verbindungen der Formel (I) mit Ammoniak, mit C₁-C₆-Alkyl-aminen, wie z.B. mit Methylamin, Ethylamin, n- oder i-Propylamin, n-, i-, s-oder t-Butylamin, n-, i-, s- oder t-Pentylamin, mit Di-(C₁-C₆-alkyl)-aminen, wie z.B. Dimethylamin, Diethylamin, Dipropylamin, Diisopropylamin, Dibutylamin, Diisobuylamin, Di-s-butylamin, Dipentylamin, Diisopentylamin, Di-s-pentylamin und Dihexylamin, mit Tri-(C₁-C₄-alkyl)-aminen, wie z.B. Trimethylamin, Triethylamin, Tripropylamin, Tributylamin und N-Ethyl-diisopropylamin, mit C₃-C₆-Cycloalkyl-aminen, wie z.B. Cyclopentylamin oder Cyclohexylamin, mit Di-(C₃-C₆-cycloalkyl)-aminen, wie z.B. Dicyclopentylamin oder Dicyclohexylamin, mit N-C₁-C₄-Alkyl-C₃-C₆-cycloalkylaminen, wie z.B. N-Methyl-cyclopentylamin, N-Ethyl-cyclopentylamin, N-Methyl-cyclohexylamin oder N-Ethyl-cyclohexylamin, mit N,N-Di-(C₁-C₄-alkyl)-C₃-C₆-cycloalkyl-aminen, wie z.B. N,N-Dimethyl-cyclopentylamin, N,N-Diethyl-cyclopentylamin, N,N-Dimethyl-cyclohexylamin oder N,N-Diethyl-cyclohexylamin, mit N-C₁-C₄-Alkyl-di-(C₃-C₆-cycloalkyl)-aminen, wie z.B. N-Methyl-dicyclopentylamin, N-Ethyl-dicyclopentylamin, N-Methyl-dicyclohexylamin oder N-Ethyl-dicyclohexylamin, mit Phenyl-C₁-C₄-alkyl-aminen, wie z.B. Benzylamin, 1-Phenyl-ethylamin oder 2-Phenyl-ethylamin, mit N-C₁-C₄-Alkyl-phenyl-C₁-C₄-alkyl-aminen, wie z.B. N-Methyl-benzylamin oder N-Ethylbenzylamin, oder mit N,N-Di-(C₁-C₄-alkyl)-phenyl-C₁-C₄-alkyl-aminen, wie z.B. N,N-Dimethyl-benzylamin oder N,N-Diethyl-benzylamin, oder mit gegebenenfalls annellierten und/oder durch C₁-C₄-Alkyl substituierten Azinen, wie z.B. Pyridin, Chinolin, 2-Methyl-pyridin, 3-Methyl-pyridin, 4-Methyl-pyridin, 2,4-Dimethyl-pyridin, 2,5-Dimethyl-pyridin, 2,6-Dimethyl-pyridin oder 5-Ethyl-2-methyl-pyridin bevorzugt.

Als basische Verbindungen, welche zur Herstellung der erfindungsgemäß einsetzbaren Salze der Verbindungen der Formel (I) verwendet werden können seien genannt:
Alkalimetall- oder Erdalkalimetall- -acetate, -amide, -carbonate, -hydrogencarbonate, -hydride, -hydroxide oder -alkanolate, wie beispielsweise Natrium-, Kaliumoder Calcium-acetat, Lithium-, Natrium-, Kalium- oder Calcium-amid, Natrium-, Kalium- oder Calcium-carbonat, Natrium-, Kalium- oder Calcium-hydrogencarbonat, Lithium-, Natrium-, Kalium- oder Calcium-hydrid, Lithium-, Natrium-, Kalium- oder Calcium-hydroxid, Natrium- oder Kalium- -methanolat, -ethanolat, n-oder i-propanolat, n-, i-, s- oder t-butanolat.

Als Beispiele für die als erfindungsgemäße Mischungspartner zu verwendenden Verbindungen der Formel (I) seien genannt:
2-(2-Chlor-phenylsulfonylaminocarbonyl)-, 2-(2-Brom-phenylsulfonylaminocarbonyl)-, 2-(2-Methyl-phenylsulfonylaminocarbonyl)-, 2-(2-Ethyl-phenylsulfonylaminocarbonyl)-, 2-(2-n-Propyl-phenylsulfonylaminocarbonyl), 2-(2-i-Propyl-phenylsulfonylaminocarbonyl), 2-(2-Trifluormethyl-phenylsulfonylaminocarbonyl)-, 2-(2-Methoxy-phenylsulfonylaminocarbonyl)-, 2-(2-Ethoxy-phenylsulfonylaminocarbonyl)-, 2-(2-n-Propoxy-phenylsulfonylaminocarbonyl)-, 2-(2-i-Propoxy-phenylsulfonylaminocarbonyl)-, 2-(2-Difluormethoxy-phenylsulfonylaminocarbonyl)-, 2-(2-Trifluormethoxy-phenylsulfonylaminocarbonyl)-, 2-(2-Methoxycarbonyl-phenylsulfonylaminocarbonyl)-, 2-(2-Ethoxycarbonyl-phenylsulfonylaminocarbonyl)-, 2-(2-n-Propoxycarbonyl-phenylsulfonylaminocarbonyl)-, 2-(2-i-Propoxycarbonyl-phenylsulfonylaminocarbonyl)- und 2-(2-Chlor-6-methyl-phenylsulfonylaminocarbonyl)-4-methyl-5-methoxy-2,4-dihydro-3H-1,2,4-triazol-3-on, -4-methyl-5-ethoxy-2,4-dihydro-3H-1,2,4-triazol-3-on, -4-methyl-5-n-propoxy-2,4-dihydro-3H-1,2,4-triazol-3-on, -4-methyl-5-i-propoxy-2,4-dihydro-3H-1,2,4-triazol-3-on, -4-methyl-5-trifluorethoxy-2,4-dihydro-3H-1,2,4-triazol-3-on, -4-methyl-5-methylthio-2,4-dihydro-3H-1,2,4-triazol-3-on, -4-methyl-5-ethylthio-2,4-dihydro-3H-1,2,4-triazol-3-on -4-methoxy-5-methyl-2,4-dihydro-3H-1,2,4-triazol-3-on, -4-methoxy-5-ethyl-2,4-dihydro-3H-1,2,4-triazol-3-on, -4-methoxy-5-n-propyl-2,4-dihydro-3H-1,2,4-triazol-3-on, -4-cyclopropyl-5-methoxy-2,4-dihydro-3H-1,2,4-triazol-3-on, -4-cyclopropyl-5-ethoxy-2,4-dihydro-3H-1,2,4-triazol-3-on, -4-cyclopropyl-5-n-propoxy-2,4-dihydro-3H-1,2,4-triazol-3-on, -4-cyclopropy)-5-i-propoxy-2,4-dihydro-3H-1,2,4-triazol-3-on und -4-cyclopropyl-5-trifluorethoxy-2,4-dihydro-3H-1,2,4-triazol-3-on sowie die Natrium- und Kalium-Salze dieser Verbindungen.

Die Verbindungen 2-(2-Methoxycarbonyl-phenylsulfonylaminocarbonyl)-4-methyl-5-n-propoxy-2,4-dihydro-3H-1,2,4-triazol-3-on (I-1) und 2-(2-Trifluormethoxyphenylsulfonylaminocarbonyl)-4-methyl-5-methoxy-2,4-dihydro-3H-1,2,4-triazol-3-on (I-2) sowie ihre Natriumsalze - (I-1, Na-Salz), (I-2, Na-Salz) - seien als Mischungskomponenten der Formel (I) besonders hervorgehoben.

Die Verbindungen der Formel (I) sind in den oben angegebenen Patentanmeldungen bzw. Patentschriften beschrieben.

Als Mischungskomponenten aus den Wirkstoffen der Gruppe 2 seien besonders hervorgehoben:
Amidosulfuron, Bromoxynil, Carfentrazone(-ethyl), Clodinafop(-propargyl), 2,4-D, Diclofop(-methyl), Diflufenican, Fluroxypyr, Isoproturon, Metosulam, Metribuzin, Metsulfuron(-methyl), Sulfosulfuron, Thifensulfuron(-methyl), Tribenuron(-methyl).

Aus dieser Gruppe ist Metribuzin als Mischungskomponente von ganz besonderem Interesse.

Es wurde nun überraschend gefunden, daß die oben definierten Wirkstoffkombinationen aus den Arylsulfonylaminocarbonyltriazolinonen der Formel (I) und den oben angeführten Wirkstoffen der Gruppe 2 bei sehr guter Nutzpflanzen-Verträglichkeit eine besonders hohe herbizide Wirksamkeit aufweisen und in verschiedenen Kulturen, insbesondere in Weizen, daneben aber auch in Mais, Gerste und Reis zur selektiven Unkrautbekämpfung verwendet werden können.

Überraschenderweise ist die herbizide Wirksamkeit der erfindungsgemäßen Wirkstoffkombinationen aus Verbindungen der oben aufgeführten Gruppen 1 und 2 erheblich höher als die Summe der Wirkungen der einzelnen Wirkstoffe.

Es liegt somit ein nicht vorhersehbarer synergistischer Effekt vor und nicht nur eine Wirkungsergänzung. Die neuen Wirkstoffkombinationen sind in vielen Kulturen gut verträglich, wobei die neuen Wirkstoffkombinationen auch sonst schwer bekämpfbare Unkräuter gut bekämpfen. Die neuen Wirkstoffkombinationen stellen somit eine wertvolle Bereicherung der Selektivherbizide dar.

Die erfindungsgemäßen Wirkstoffkombinationen können z.B. bei den folgenden Pflanzen verwendet werden:
Dikotyle Unkräuter der Gattungen: Sinapis, Lepidium, Galium, Stellaria, Matricaria, Anthemis, Galinsoga, Chenopodium, Urtica, Senecio, Amaranthus, Portulaca, Xanthium, Convolvulus, Ipomoea, Polygonum, Sesbania, Ambrosia, Cirsium, Carduus, Sonchus, Solanum, Rorippa, Rotala, Lindernia, Lamium, Veronica, Abutilon, Emex, Datura, Viola, Galeopsis, Papaver, Centaurea, Trifolium, Ranunculus, Taraxacum.
Dikotyle Kulturen der Gattungen: Gossypium, Glycine, Beta, Daucus, Phaseolus, Pisum, Solanum, Linum, Ipomoea, Vicia, Nicotiana, Lycopersicon, Arachis, Brassica, Lactuca, Cucumis, Cuburbita.
Monokotyle Unkräuter der Gattungen: Echinochloa, Setaria, Panicum, Digitaria, Phleum, Poa, Festuca, Eleusine, Brachiaria, Lolium, Bromus, Avena, Cyperus, Sorghum, Agropyron, Cynodon, Monochoria, Fimbristylis, Sagittaria, Eleocharis, Scirpus, Paspalum, Ischaemum, Sphenoclea, Dactyloctenium, Agrostis, Alopecurus, Apera, Phalaris.
Monokotyle Kulturen der Gattungen: Oryza, Zea, Triticum, Hordeum, Avena, Secale, Sorghum, Panicum, Saccharum, Ananas, Asparagus, Allium.

Die Verwendung der erfindungsgemäßen Wirkstoffkombinationen ist jedoch keineswegs auf diese Gattungen beschränkt, sondern erstreckt sich in gleicher Weise auch auf andere Pflanzen.

Der synergistische Effekt der erfindungsgemäßen Wirkstoffkombinationen ist bei bestimmten Konzentrationsverhältnissen besonders stark ausgeprägt. Jedoch können die Gewichtsverhältnisse der Wirkstoffe in den Wirkstoffkombinationen in relativ großen Bereichen variiert werden. Im allgemeinen entfallen auf 1 Gewichtsteil Wirkstoff der Formel (I) 0,01 bis 1000 Gewichtsteile, vorzugsweise 0,05 bis 500 Gewichtsteile und besonders bevorzugt 0,1 bis 100 Gewichtsteile Wirkstoff der Gruppe 2.

Die Wirkstoffkombinationen können in die üblichen Formulierungen übergeführt werden, wie Lösungen, Emulsionen, Spritzpulver, Suspensionen, Pulver, Stäubemittel, Pasten, lösliche Pulver, Granulate, Suspensions-Emulsions-Konzentrate, Wirkstoff-imprägnierte Natur- und synthetische Stoffe sowie Feinstverkapselungen in polymeren Stoffen.

Diese Formulierungen werden in bekannter Weise hergestellt, z. B. durch Vermischen der Wirkstoffe mit Streckmitteln, also flüssigen Lösungsmitteln und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel können z.B. auch organische Lösungsmittel als Hilfslösungsmittel verwendet werden. Als flüssige Lösungsmittel kommen im wesentlichen in Frage: Aromaten, wie Xylol, Toluol, oder Alkylnaphthaline, chlorierte Aromaten und chlorierte aliphatische Kohlenwasserstoffe, wie Chlorbenzole, Chlorethylene oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone wie Aceton, Methylethylketon, Methylisobutylketon oder Cyclohexanon, stark polare Lösungsmittel, wie Dimethylformamid und Dimethylsulfoxid, sowie Wasser.

Als feste Trägerstoffe kommen in Frage:
z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kieselsäure, Aluminiumoxid und Silikate, als feste Trägerstoffe für Granulate kommen in Frage; z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengeln; als Emulgier- und/oder schaumerzeugende Mittel kommen in Frage: z.B. nichtionogene und anionische Emulgatoren, wie Polyoxyethylen-Fettsäure-Ester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen in Frage: z.B. Lignin-Sulfitablaugen und Methylcellulose.

Es können in den Formulierungen Haftmittel wie Carboxymethylcellulose, natürliche und synthetische pulvrige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent an Wirkstoffen, vorzugsweise zwischen 0,5 und 90 %.

Die erfindungsgemäßen Wirkstoffkombinationen werden im allgemeinen in Form von Fertigformulierungen zur Anwendung gebracht. Die in den Wirkstoffkombinationen enthaltenen Wirkstoffe können aber auch in Einzelformulierungen bei der Anwendung gemischt, d.h. in Form von Tankmischungen zur Anwendung gebracht werden.

Die neuen Wirkstoffkombinationen können als solche oder in ihren Formulierungen weiterhin auch in Mischung mit anderen bekannten Herbiziden Verwendung finden, wobei wiederum Fertigformulierungen oder Tankmischungen möglich sind. Auch eine Mischung mit anderen bekannten Wirkstoffen, wie Fungiziden, Insektiziden, Akariziden, Nematiziden, Schutzstoffen gegen Vogelfraß, Wuchsstoffen, Pflanzennährstoffen und Bodenstrukturverbesserungsmitteln ist möglich. Für bestimmte Anwendungszwecke, insbesondere im Nachauflauf-Verfahren, kann es ferner vorteilhaft sein, in die Formulierungen als weitere Zusatzstoffe pflanzenverträgliche mineralische oder vegetabilische Öle (z.B. das Handelspräparat "Oleo DuPont 11E") oder Ammoniumsalze wie z.B. Ammoniumsulfat oder Ammoniumrhodanid aufzunehmen.

Die neuen Wirkstoffkombinationen können als solche, in Form ihrer Formulierungen oder der daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Stäuben oder Streuen.

Die erfindungsgemäßen Wirkstoffkombinationen können vor und nach dem Auflaufen der Pflanzen appliziert werden, also im Vorauflauf und Nachauflauf-Verfahren. Sie können auch vor der Saat in den Boden eingearbeitet werden.

Die gute herbizide Wirkung der neuen Wirkstoffkombinationen geht aus den nachfolgenden Beispielen hervor. Während die einzelnen Wirkstoffe in der herbiziden Wirkung Schwächen aufweisen, zeigen die Kombinationen durchweg eine sehr gute Unkrautwirkung, die über eine einfache Wirkungssummierung hinausgeht.

Ein synergistischer Effekt liegt bei Herbiziden immer dann vor, wenn die herbizide Wirkung der Wirkstoffkombination größer ist als die der einzelnen applizierten Wirkstoffe.

Die zu erwartende Wirkung für eine gegebene Kombination zweier Herbizide kann wie folgt berechnet werden (vgl. COLBY, S.R.: "Calculating synergistic and antagonistic responses of herbicide combinations", Weeds 15, Seiten 20 - 22, 1967):

| | |
|---|---|
| Wenn X = | % Schädigung durch Herbizid A (Wirkstoff der |
| | Formel I) bei p kg/ha Aufwandmenge |
| und Y = | % Schädigung durch Herbizid B (Wirkstoff der |
| | Formel II) bei q kg/ha Aufwandmenge |
| und E = | die erwartete Schädigung der Herbizide A und B bei |
| | p und q kg/ha Aufwandmenge, |
| dann ist E = | X + Y - (X * Y/100). |

Ist die tatsächliche Schädigung größer als berechnet, so ist die Kombination in ihrer Wirkung überadditiv, das heißt, sie zeigt einen synergistischen Effekt.

Aus den folgenden Beispielen geht hervor, daß die gefundene herbizide Wirkung der erfindungsgemäßen Wirkstoffkombinationen bei den Unkräutern größer ist als die berechnete, das heißt, daß die neuen Wirkstoffkombinationen synergistisch wirken.

### Beispiel A

### Post-emergence-Test

| | | |
|---|---|---|
| Lösungsmittel | 5 Gewichtsteile | Aceton |
| Emulgator | 1 Gewichtsteil | Alkylarylpolyglykolether |

Zur Herstellung einer zweckmäßigen Wirkstoffzubereitung vermischt man 1 Gewichtsteil Wirkstoff mit der angegebenen Menge Lösungsmittel, gibt die angegebene Menge Emulgator zu und verdünnt das Konzentrat mit Wasser auf die gewünschte Konzentration.

Mit der Wirkstoffzubereitung spritzt man Testpflanzen, welche eine Höhe von 5 - 15 cm haben, so, daß die jeweils gewünschten Wirkstoffmengen pro Flächeneinheit ausgebracht werden. Die Konzentration der Spritzbrühe wird so gewählt, daß in 1 000 1 Wasser/ha die jeweils gewünschten Wirkstoffmengen ausgebracht werden. Nach drei Wochen wird der Schädigungsgrad der Pflanzen bonitiert in % Schädigung im Vergleich zur Entwicklung der unbehandelten Kontrolle.

Es bedeuten:

| | |
|---|---|
| 0 % | = keine Wirkung (wie unbehandelte Kontrolle) |
| 100 % | = totale Vernichtung |

Wirkstoffe, Aufwandmengen, Testpflanzen und Resultate gehen aus den nachfolgenden Tabelle A-1 und A-2 hervor, wobei die in den Tabelle verwendeten Abkürzungen folgende Bedeutungen haben:
- (I-1, Na-Salz) =: Natriumsalz von 2-(2-Methoxycarbonyl-phenylsulfonylaminocarbonyl)-4-methyl-5-n-propoxy-2,4-dihydro-3H-1,2,4-triazol-3-on (I-1);
- (I-2, Na-Salz) =: Natriumsalz von 2-(2-Trifluormethoxy-phenylsulfonylaminocarbonyl)-4-methyl-5-methoxy-2,4-dihydro-3H-1,2,4-triazol-3-on (I-2);
- gef. =: gefundene Schädigung bzw. Wirkung (in %);
- ber. =: nach der COLBY-Formel berechnete Schädigung bzw. Wirkung (in %).

**Tabelle A-1:**

| Post-emergence-Test / Gewächshaus | | | | | |
|---|---|---|---|---|---|
| Wirkstoff bzw. -kombination | Aufwandmenge g/ha (Wirkstoff) | Testpflanzen Schädigung bzw. Wirkung in % | | | |
| | | Apera spica-Venti | | Bromus secalinus | |
| | | gef. | ber. | gef. | ber. |
| Metribuzin - bekannt - | 60 | 20 | | 0 | |
| (I-1, Na-Salz) - bekannt - | 15 | 70 | | 60 | |
| Metribuzin + (I-1, Na-Salz) - erfindungsgemäß - | 60 + 15 | 95 | 76 | 80 | 60 |

**Tabelle A-2:**

| Post-emergence-Test / Gewächshaus | | | | | |
|---|---|---|---|---|---|
| Wirkstoff bzw. -kombination | Aufwandmenge g/ha (Wirkstoff) | Testpflanzen Schädigung bzw. Wirkung in % | | | |
| | | Apera spica-Venti | | Setaria viridis | |
| | | gef. | ber. | gef. | ber. |
| Metribuzin - bekannt - | 60 | 20 | | 50 | |
| (I-2, Na-Salz) - bekannt - | 15 | 60 | | 90 | |
| Metribuzin + (I-2, Na-Salz) - erfindungsgemäß - | 60 + 15 | 98 | 68 | 100 | 95 |

## Patentansprüche

1. Synergistische herbizide Mittel, **gekennzeichnet durch** einen wirksamen Gehalt an einer Wirkstoffkombination bestehend aus
(a) einem Arylsulfonylaminocarbonyltriazolinon der allgemeinen Formel (I) 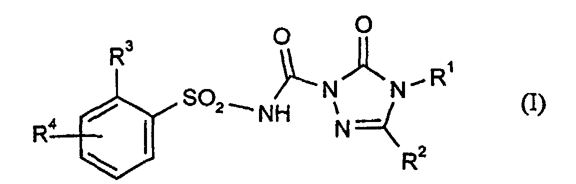 in welcher
R¹ für Wasserstoff, Hydroxy, Amino, Alkylidenamino oder für jeweils gegebenenfalls substituiertes Alkyl, Alkenyl, Alkinyl, Alkoxy, Alkenyloxy, Alkylamino, Dialkylamino, Cycloalkyl, Cycloalkylalkyl, Cycloalkylamino, Aryl oder Arylalkyl steht,
R² für Wasserstoff, Hydroxy, Mercapto, Amino, Cyano, Halogen oder für jeweils gegebenenfalls substituiertes Alkyl, Alkoxy, Alkylthio, Alkylamino, Dialkylamino, Alkenyl, Alkinyl, Alkenyloxy, Alkinyloxy, Alkenylthio, Alkinylthio, Alkenylamino, Alkinylamino, Cycloalkyl, Cycloalkyloxy, Cycloalkylthio, Cycloalkylamino, Cycloalkylalkyl, Aryl, Aryloxy, Arylthio, Arylamino oder Arylalkyl steht,
R³ für Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht, und
R⁴ für Wasserstoff, Nitro, Cyano, Halogen oder für jeweils gegebenenfalls substituiertes Alkyl, Alkylcarbonyl, Alkoxy, Alkoxycarbonyl, Alkylthio, Alkylsulfinyl, Alkylsulfonyl, Alkylamino, Alkenyl, Alkenyloxy, Alkenylthio, Alkenylamino, Alkinyl, Alkinyloxy, Alkinylthio, Cycloalkyl, Cycloalkyloxy, Cycloalkylthio, Cycloalkylamino, Aryl, Aryloxy, Arylthio, Arylsulfinyl, Arylsulfonyl oder Arylamino steht,
und/oder einem Salz einer Verbindung der Formel (I)
("Wirkstoffe der Gruppe 1")
und
(b) einer oder mehrerer Verbindungen aus einer zweiten Gruppe von Herbiziden, welche die nachstehend genannten Wirkstoffe enthält:
N-(4,6-Dimethoxy-pyrimidin-2-yl)-N'-(N-methyl-N-methylsulfonyl-sulfamoyl)-harnstoff (Amidosulfuron), 3,5-Dibrom-4-hydroxy-benzonitril (Bromoxynil), 2-(4-Chlor-2-fluor-5-(2-chlor-2-ethoxycarbonyl-ethyl)-phenyl)-4-difluormethyl-5-methyl-2,4-dihydro-3H-1,2,4-triazol-3-on (Carfentrazone-ethyl, F-8426), (R)-(2-Propinyl)-2-[4-(5-chlor-3-fluor-pyridin-2-yl-oxy)-phenoxy-propanoat (Clodinafop-propargyl), 2,4-Dichlor-phenoxyessigsäure (2,4-D), (R)-2-(2,4-Dichlor-phenoxy)-propansäure (Dichlorprop-P), Methyl-2-[4-(2,4-dichlorphenoxy)-phenoxy]-propanoat (Diciofop-methyl), N-(2,4-Difluor-phenyl)-2-(3-trifluormethyl-phenoxy)-pyridin-3-carboxamid (Diflufenican), (4-Amino-3,5-dichlor-6-fluor-pyridin-2-yl-oxy)-essigsäure (Fluroxypyr), 5-Methylamino-2-phenyl-4-(3-trifluormethyl-phenyl)-3(2H)-furanon (Flurtamone), N-Phosphonomethyl-glycin (-Isopropylammmonium), (Glyphosate, -Isopropylammonium), Methyl-2-(4,5-dihydro-4-methyl-4-isopropyl-5-oxo-1H-imidazol-2-yl)-4-methyl-benzoat (Imazamethabenz-methyl), 2-(4,5-Dihydro-4-methyl-4-isopropyl-5-oxo-1H-imidazol-2-yl)-5-methoxymethyl-pyridin-3-carbonsäure (Imazamox), N,N-Dimethyl-N'-(4-isopropyl-phenyl)-harnstoff (Isoproturon), N-(2,6-Dichlor-3-methyl-phenyl)-5,7-dimethoxy-1,2,4-triazolo[1,5-a]-pyrimidin-2-sulfonamid (Metosulam, DE-511), 4-Amino-6-tert-butyl-3-methylthio-1,2,4-triazin-5(4H)-on (Metribuzin), N-(4-Methoxy-6-methyl-1,3,5-triazin-2-yl)-N'-(2-methoxycarbonyl-phenylsulfonyl)-harnstoff (Metsulfuron-methyl), N-(4,6-Dimethoxy-pyrimidin-2-yl)-N'-(2-ethylsulfonyl-imidazo[1,2-a]pyridin-3-sulfonamid (Sulfosulfuron, MON-37500), N-(4-Methoxy-6-methyl-1,3,5-triazin-2-yl)-N'-(2-methoxycarbonyl-thien-3-yl-sulfonyl)-harnstoff (Thifensulfuron-methyl), N-Methyl-N-(4-methoxy-6-methyl-1,3,5-triazin-2-yl)-N'-(2-methoxycarbonyl-phenylsulfonyl)-harnstoff (Tribenuron-methyl), ("Wirkstoffe der Gruppe 2"),
wobei im allgemeinen auf 1 Gewichtsteil eines Wirkstoffs der Gruppe 1 (d.h. der Formel (I)) 0,01 bis 1000 Gewichtsteile eines Wirkstoffs der Gruppe 2 entfallen.

2. Synergistische herbizide Mittel gemäß Anspruch 1, **dadurch gekennzeichnet, dass** sie als Wirkstoff der Gruppe 2 einen Wirkstoff aus der nachfolgend genannten Verbindungsgruppe enthalten:
Amidosulfuron, Bromoxynil, Carfentrazone(-ethyl), Clodinafop(-propargyl), 2,4-D, Diclofop(-methyl), Diflufenican, Fluroxypyr, Isoproturon, Metosulam, Metribuzin, Metsulfuron(-methyl), Sulfosulfuron, Thifensulfuron(-methyl) oder Tribenuron(-methyl).

3. Synergistische herbizide Mittel gemäß Anspruch 1, **dadurch gekennzeichnet, dass** sie als Wirkstoff der Gruppe 1 2-(2-Methoxycarbonyl-phenylsulfonylaminocarbonyl)-4-methyl-5-n-propoxy-2,4-dihydro-3H-1,2,4-triazol-3-on (I-1) oder 2-(2-Trifluormethoxy-phenylsulfonylaminocarbonyl)-4-methyl-5-methoxy-2,4-dihydro-3H-1,2,4-triazol-3-on (I-2) oder ein Natriumsalz dieser Verbindungen enthalten.

4. Synergistische herbizide Mittel gemäß Anspruch 1, **dadurch gekennzeichnet, dass** sie als Wirkstoff der Gruppe 2 4-Amino-6-tert.-butyl-3-methylthio-1,2,4-triazin-5(4H)-on (Metribuzin) enthalten.

5. Synergistische herbizide Mittel gemäß Anspruch 1, **dadurch gekennzeichnet, dass** sie als Wirkstoff der Gruppe 1 2-(2-Methoxycarbonyl-phenylsulfonylaminocarbonyl)-4-methyl-5-n-propoxy-2,4-dihydro-3H-1,2,4-triazol-3-on (I-1) oder 2-(2-Trifluormethoxy-phenylsulfonylaminocarbonyl)-4-methyl-5-methoxy-2,4-dihydro-3H-1,2,4-triazol-3-on (I-2) oder ein Natriumsalz dieser Verbindungen und als Wirkstoff der Gruppe 2 4-Amino-6-tert.-butyl-3-methylthio-1,2,4-triazin-5(4H)-on (Metribuzin) enthalten.

6. Synergistische herbizide Mittel gemäß Ansprüchen 1 bis 5, **dadurch gekennzeichnet, dass** auf 1 Gewichtsteil Wirkstoff der Gruppe 1 0,05 bis 500 Gewichtsteile, insbesondere 0,1 bis 100 Gewichtsteile, Wirkstoff der Gruppe 2 . entfallen.

7. Verfahren zur Bekämpfung von Unkraut, **dadurch gekennzeichnet, dass** man eine synergistische Wirkstoffkombination gemäß den Ansprüchen 1 bis 6 auf Unkraut oder seinen Lebensraum einwirken lässt.

8. Verwendung von synergistischen Wirkstoffkombinationen gemäß den Ansprüchen 1 bis 6 zur Bekämpfung von Unkraut.

9. Verfahren zur Herstellung von synergistischen herbiziden Mitteln, **dadurch gekennzeichnet, dass** man eine Wirkstoffkombination gemäß den Ansprüchen 1 bis 6 mit Streckmitteln und/oder oberflächenaktiven Mitteln vermischt.

## Claims

1. Synergistic herbicidal compositions, **characterized by** an effective content of a combination of active compounds comprising
(a) an arylsulphonylaminocarbonyltriazolinone of the general formula (I) 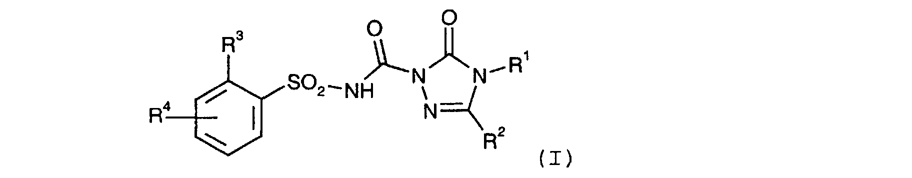 in which
R¹ represents hydrogen, hydroxyl, amino, alkylideneamino or represents alkyl, alkenyl, alkinyl, alkoxy, alkenyloxy, alkylamino, dialkylamino, cycloalkyl, cycloalkylalkyl, cycloalkylamino, aryl or arylalkyl, each of which is optionally substituted,
R² represents hydrogen, hydroxyl, mercapto, amino, cyano, halogen or represents alkyl, alkoxy, alkylthio, alkylamino, dialkylamino, alkenyl, alkinyl, alkenyloxy, alkinyloxy, alkenylthio, alkinylthio, alkenylamino, alkinylamino, cycloalkyl, cycloalkyloxy, cycloalkylthio, cycloalkylamino, cycloalkylalkyl, aryl, aryloxy, arylthio, arylamino or arylalkyl, each of which is optionally substituted,
R³ represents nitro, cyano, halogen or represents alkyl, alkylcarbonyl, alkoxy, alkoxycarbonyl, alkylthio, alkylsulphinyl, alkylsulphonyl, alkylamino, alkenyl, alkenyloxy, alkenylthio, alkenylamino, alkinyl, alkinyloxy, alkinylthio, cycloalkyl, cycloalkyloxy, cycloalkylthio, cycloalkylamino, aryl, aryloxy, arylthio, arylsulphinyl, arylsulphonyl or arylamino, each of which is optionally substituted, and
R⁴ represents hydrogen, nitro, cyano, halogen or represents alkyl, alkylcarbonyl, alkoxy, alkoxycarbonyl, alkylthio, alkylsulphinyl, alkylsulphonyl, alkylamino, alkenyl, alkenyloxy, alkenylthio, alkenylamino, alkinyl, alkinyloxy, alkinylthio, cycloalkyl, cycloalkyloxy, cycloalkylthio, cycloalkylamino, aryl, aryloxy, arylthio, arylsulphinyl, arylsulphonyl or arylamino, each of which is optionally substituted,
and/or a salt of a compound of the formula (I)
("active compounds of Group 1")
and
(b) one or more compounds from a second group of herbicides comprising the active compounds listed below:
N-(4,6-dimethoxy-pyrimidin-2-yl)-N'-(N-methyl-N-methylsulphonyl-sulphamoyl)-urea (amidosulfuron), 3,5-dibromo-4-hydroxybenzonitrile (bromoxynil), 2-(4-chloro-2-fluoro-5-(2-chloro-2-ethoxycarbonyl-ethyl)-phenyl)-4-difluoromethyl-5-methyl-2,4-dihydro-3H-1,2,4-triazol-3-one (carfentrazone-ethyl, F-8426), (R)-(2-propinyl)-2-[4-(5-chloro-3-fluoro-pyridin-2-yl-oxy)-phenoxy-propanoate (clodinafop-propargyl), 2,4-dichlorophenoxyacetic acid (2,4-D), (R)-2-(2,4-dichlorophenoxy)-propionic acid (dichlorprop-P), methyl 2-[4-(2,4-dichloro-phenoxy)-phenoxy]-propionate (diclofop-methyl), N-(2,4-difluoro-phenyl)-2-(3-trifluoromethyl-phenoxy)-pyridine-3-carboxamide (diflufenican), (4-amino-3,5-dichloro-6-fluoro-pyridin-2-yl-oxy)-acetic acid (fluroxypyr), 5-methylamino-2-phenyl-4-(3-trifluoromethyl-phenyl)-3(2H)-furanone (flurtamone), N-phosphonomethyl-glycine (-isopropylammonium), (glyphosate, -isopropylammonium), methyl 2-(4,5-dihydro-4-methyl-4-isopropyl-5-oxo-1H-imidazol-2-yl)-5-methoxymethyl-pyridine-3-carboxylic acid (imazamox), N,N-dimethyl-N'-(4-isopropylphenyl)-urea (isoproturon), N-(2,6-dichloro-3-methyl-phenyl)-5,7-dimethoxy-1,2,4-triazolo[1,5-a]-pyrimidine-2-sulphonamide (metosulam, DE-511), 4-amino-6-tert-butyl-3-methylthio-1,2,4-triazin-5-(4H)-one (metribuzin), N-(4-methoxy-6-methyl-1,3,5-triazin-2-yl)-N'-(2-methoxycarbonyl-phenylsulphonyl)-urea (metsulfuron-methyl), N-(4,6-dimethoxy-pyrimidin-2-yl)-N'-(2-ethylsulphonyl-imidazo[1,2-a]pyridine-3-sulphonamide (sulfosulfuron, MON-37500), N-(4-methoxy-6-methyl-1,3,5-triazin-2-yl)-N'-(2-methoxycarbonyl-thien-3-yl-sulphonyl)-urea (thifensul-furon-methyl), N-methyl-N-(4-methoxy-6-methyl-1,3,5-triazin-2-yl)-N'-(2-methoxycarbonyl-phenylsul-phonyl)-urea (tribenuron-methyl), ("active compounds of Group 2"),
where generally from 0.01 to 1000 parts by weight of an active compound of Group 2 are used per part by weight of an active compound of Group 1 (i.e. of the formula (I)).

2. Synergistic herbicidal compositions according to Claim 1, **characterized in that** they comprise, as active compound of Group 2, an active compound from the group of compounds listed below:
amidosulfuron, bromoxynil, carfentrazone(-ethyl), clodinafop(-propargyl), 2,4-D, diclofop(-methyl), diflufenican, fluroxypyr, isoproturon, metosulam, metribuzin, metsulfuron(-methyl), sulfosulfuron, thifensulfuron(-methyl) tribenuron(-methyl).

3. Synergistic herbicidal compositions according to Claim 1, **characterized in that** they comprise, as active compound of Group 1, 2-(2-methoxycarbonyl-phenylsulphonylaminocarbonyl)-4-methyl-5-n-propoxy-2,4-dihydro-3H-1,2,4-triazol-3-one (I-1) or 2-(2-trifluoromethoxy-phenylsulphonylaminocarbonyl)-4-methyl-5-methoxy-2,4-dihydro-3H-1,2,4-triazol-3-one (I-2) or a sodium salt of these compounds.

4. Synergistic herbicidal compositions according to Claim 1, **characterized in that** they comprise, as active compound of Group 2, 4-amino-6-tert-butyl-3-methylthio-1,2,4-triazine-5(4H)-one (metribuzin).

5. Synergistic herbicidal compositions according to Claim 1, **characterized in that** they comprise, as active compound of Group 1, 2-(2-methoxycarbonyl-phenylsulphonylaminocarbonyl)-4-methyl-5-n-propoxy-2,4-dihydro-3H-1,2,4-triazol-3-one (I-1) or 2-(2-trifluoromethoxy-phenylsulphonylaminocarbonyl) - 4-methyl-5-methoxy-2,4-dihydro-3H-1,2,4-triazol-3-one (I-2) or a sodium salt of these compounds and, as active compound of Group 2, 4-amino-6-tert-butyl-3-methylthio-1,2,4-triazine-5(4H)-one (metribuzin).

6. Synergistic herbicidal compositions according to Claims 1 to 5, **characterized in that** they comprise from 0.05 to 500 parts by weight, in particular from 0.1 to 100 parts by weight, of active compound of Group 2 per part by weight of active compound of Group 1.

7. Method for controlling weeds, **characterized in that** a synergistic active compound combination according to Claims 1 to 6 is allowed to act on weeds or their habitat.

8. The use of synergistic active compound combinations according to Claims 1 to 6 for controlling weeds.

9. Process for preparing synergistic herbicidal compositions, **characterized in that** an active compound combination according to Claims 1 to 6 is mixed with extenders and/or surfactants.

## Revendications

1. Agents herbicides synergiques, **caractérisés par** une teneur active en une combinaison de substances actives constituée par
(a) une arylsulfonylaminocarbonyltriazolinone répondant à la formule générale (I) 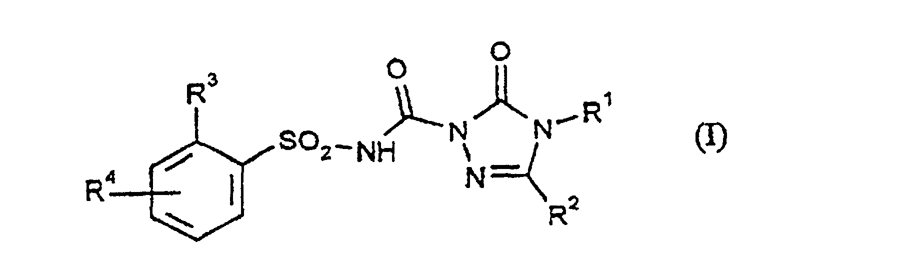 dans laquelle
R¹ représente un atome d'hydrogène, un groupe hydroxyle, un groupe amino, un groupe alkylidènamino ; ou représente un groupe alkyle, un groupe alcényle, un groupe alcynyle, un groupe alcoxy, un groupe alcényloxy, un groupe alkylamino, un groupe dialkylamino, un groupe cycloalkyle, un groupe cycloalkylalkyle, un groupe cycloalkylamino, un groupe aryle ou un groupe arylalkyle, chacun de ces groupes portant le cas échéant un ou plusieurs substituants identiques ou différents,
R² représente un atome d'hydrogène, un groupe hydroxyle, un groupe mercapto, un groupe amino, un groupe cyano, un atome d'halogène ; ou représente un groupe alkyle, un groupe alcoxy, un groupe alkylthio, un groupe alkylamino, un groupe dialkylamino, un groupe alcényle, un groupe alcynyle, un groupe alcényloxy, un groupe alcynyloxy, un groupe alcénylthio, un groupe alcynylthio, un groupe alcénylamino, un groupe alcynylamino, un groupe cycloalkyle, un groupe cycloalkyloxy, un groupe cycloalkylthio, un groupe cycloalkylamino, un groupe cycloalkylalkyle, un groupe aryle, un groupe aryloxy, un groupe arylthio, un groupe arylamino ou un groupe arylalkyle, chacun de ces groupes portant le cas échéant un ou plusieurs substituants identiques ou différents,
R³ représente un groupe nitro, un groupe cyano, un atome d'halogène ; ou représente un groupe alkyle, un groupe alkylcarbonyle, un groupe alcoxy, un groupe alcoxycarbonyle, un groupe alkylthio, un groupe alkylsulfinyle, un groupe alkylsulfonyle, un groupe alkylamino, un groupe alcényle, un groupe alcényloxy, un groupe alcénylthio, un groupe alcénylamino, un groupe alcynyle, un groupe alcynyloxy, un groupe alcynylthio, un groupe cycloalkyle, un groupe cycloalkyloxy, un groupe cycloalkylthio, un groupe cycloalkylamino, un groupe aryle, un groupe aryloxy, un groupe arylthio, un groupe arylsulfinyle, un groupe arylsulfonyle ou un groupe arylamino, chacun de ces groupes portant le cas échéant un ou plusieurs substituants identiques ou différents, et
R⁴ représente un atome d'hydrogène, un groupe nitro, un groupe cyano, un atome d'halogène ; ou représente un groupe alkyle, un groupe alkylcarbonyle, un groupe alcoxy, un groupe alcoxycarbonyle, un groupe alkylthio, un groupe alkylsulfinyle, un groupe alkylsulfonyle, un groupe alkylamino, un groupe alcényle, un groupe alcényloxy, un groupe alcénylthio, un groupe alcénylamino, un groupe alcynyle, un groupe alcynyloxy, un groupe alcynylthio, un groupe cycloalkyle, un groupe cycloalkyloxy, un groupe cycloalkylthio, un groupe cycloalkylamino, un groupe aryle, un groupe aryloxy, un groupe arylthio, un groupe arylsulfinyle, un groupe arylsulfonyle ou un groupe arylamino, chacun de ces groupes portant le cas échéant un ou plusieurs substituants identiques différents,
et/ou un sel d'un composé répondant à la formule (I)
("substances actives du groupe 1")
et
(b) un ou plusieurs composés choisis parmi un deuxième groupe d'herbicides, qui contient les substances actives mentionnées ci-après :
la N-(4,6-diméthoxy-pyrimidine-2-yl)-N'-(N-méthyl-N-méthylsulfonyl-sulfamoyle)-urée (Amidosulfuron), le 3,5-dibromo-4-hydroxy-benzonitrile (Bromoxynil), la 2-(4-chloro-2-fluoro-5-(2-chloro-2-éthoxycarbonyl-éthyl)-phényl)-4-difluorométhyl-5-méthyl-2,4-dihydro-3H-1,2,4-triazol-3-one (Carfentrazoneéthyl, F-8426), le (R)-(2-propynyl)-2-[4-(5-chloro-3-fluoro-pyridin-2-yl-oxy)-phénoxy-propanoate (Clodinafop-propargyl), l'acide 2,4-dichlorophénoxyacétique (2,4-D), l'acide (R)-2-(2,4-dichlorophénoxy)propanoïque (Dichlorprop-P), le 2-[4-(2,4-dichlorophénoxy)-phénoxy]-propanoate de méthyle (Diclofop-méthyl), le N-(2,4-difluorophényl)-2-(3-trifluorométhyl-phénoxy)-pyridine-3-carboxamide (Diflufenican), l'acide (4-amino-3,5-dichloro-6-fluoro-pyridine-2-yl-oxy)-acétique (Fluroxypyr), la 5-méthylamino-2-phényl-4-(3-trifluorométhyl-phényl)-3(2H)-furanone (Flurtamone), la N-phosphono-méthyl-glycine (-isopropylammonium), (Glyphosate, -isopropylammonium), le 2-(4,5-dihydro-4-méthyl-4-isopropyl-5-oxo-1H-imidazol-2-yl)-4-méthyl-benzoate de méthyle (Imazamethabenz-methyl), l'acide 2-(4,5-dihydro-4-méthyl-4-isopropyl-5-oxo-lH-imidazol-2-yl)-5-méthoxyméthyl-pyridine-3-carboxylique (Imazamox), la N,N-diméthyl-N'-(4-isopropylphényl)-urée (Isoproturon), le N-(2,6-dichloro-3-méthyl-phényl)-5,7-diméthoxy-1,2,4-triazolo[1,5-a]-pyrimidine-2-sulfonamide (Metosulam, DE-511), la 4-amino-6-tert.-butyl-3-méthylthio-1,2,4-triazin-5(4H)-one (Metribuzin), la N-(4-méthoxy-6-méthyl-1,3,5-triazin-2-yl)-N'-(2-méthoxycarbonyl-phénylsulfonyl)-urée (Metsulfuron-méthyl), le N-(4,6-diméthoxy-pyrimidin-2-yl)-N'-(2-éthylsulfonylimidazo[1,2-a]pyridin-3-sulfonamide (Sulfosulfuron, MON-37500), la N-(4-méthoxy-6-méthyl-1,3,5-triazin-2-yl)-N'-(2-méthoxycarbonyl-thién-3-yl-sulfonyl)-urée (Thifensulfuron-méthyl), la N-méthyl-N-(4-méthoxy-6-méthyl-1,3,5-triazin-2-yl)-N'-(2-méthoxycarbonyl-phénylsulfonyl)-urée (Tribenuron-méthyl) ("substances actives du groupe 2"),
dans lequel, pour 1 partie en poids d'une substance active du groupe 1 (c'est-à-dire répondant à la formule (I)), on compte en général de 0,01 à 1000 parties en poids d'une substance active du groupe 2.

2. Agents herbicides synergiques selon la revendication 1, **caractérisés en ce qu'**ils contiennent, à titre de substance active du groupe 2, une substance active choisie parmi le groupe de composés mentionnés ci-après :
Amidosulfuron, Bromoxynil, Carfentrazone(-éthyl), Clodinafop(-propargyl), 2,4-D, Diclofop(-méthyl), Diflufenican, Fluroxypyr, Isoproturon, Metosulam, Metribuzin, Metsulfuron(-méthyl), Sulfosulfuron, Thifensulfuron(-méthyl) ou Tribenuron(-méthyl).

3. Agents herbicides synergiques selon la revendication 1, **caractérisés en ce qu'**ils contiennent, à titre de substance active du groupe 1, la 2-(2-méthoxycarbonyl-phénylsulfonyl-aminocarbonyl)-4-méthyl-5-n-propoxy-2,4-dihydro-3H-1,2,4-triazol-3-one (I-1) ou la 2-(2-trifluorométhoxy-phénylsulfonylaminocarbonyl)-4-méthyl-5-méthoxy-2,4-dihydro-3H-1,2,4-triazol-3-one (I-2) ou encore un sel de sodium de ces composés.

4. Agents herbicides synergiques selon la revendication 1, **caractérisés en ce qu'**ils contiennent à titre de substance active du groupe 2, la 4-amino-6-tert.-butyl-3-méthylthio-1,2,4-triazin-5(4H)-one (Metribuzin).

5. Agents herbicides synergiques selon la revendication 1, **caractérisés en ce qu'**ils contiennent, à titre de substance active du groupe 1, la 2-(2-méthoxycarbonyl-phénylsulfonyl-aminocarbonyl)-4-méthyl-5-n-propoxy-2,4-dihydro-3H-1,2,4-triazol-3-one (I-1) ou la 2-(2-trifluorométhoxy-phénylsulfonylaminocarbonyl)-4-méthyl-5-méthoxy-2,4-dihydro-3H-1,2,4-triazol-3-one (I-2) ou encore un sel de sodium de ces composés et, à titre de substance active du groupe 2, la 4-amino-6-tert.-butyl-3-méthylthio-1,2,4-triazin-5(4H)-one (Metribuzin).

6. Agents herbicides synergiques selon la revendication 1, **caractérisés en ce que**, pour 1 partie en poids d'une substance active du groupe 1, on compte de 0,05 à 500 parties en poids, en particulier de 0,1 à 100 parties en poids d'une substance active du groupe 2.

7. Procédé pour lutter contre les mauvaises herbes, **caractérisé en ce qu'**on laisse agir une combinaison synergique de substances actives selon les revendications 1 à 6, sur les mauvaises herbes ou sur leur biotope.

8. Utilisation de combinaisons synergiques de substances actives selon les revendications 1 à 6, pour lutter contre les mauvaises herbes.

9. Procédé pour la préparation d'agents herbicides synergiques, **caractérisé en ce que** l'on mélange une combinaison de substances actives selon les revendications 1 à 6 avec des diluants et/ou avec des agents tensioactifs.
